# EUROPÄISCHE PATENTANMELDUNG

(11) **EP 1 629 876 A1**
(43) Veröffentlichungstag der Anmeldung: **01.03.2006**
(21) Anmeldenummer: 04020356.4
(22) Anmeldetag: 27.08.2004
(51) Int. Cl.: B01D 29/41, B01D 25/26

(54) **Filtermodulaufbau mit Zusammenhalte-Elementen**

(71) Anmelder: Filtrox AG, 9000 St. Gallen (CH)
(72) Erfinder: Zuber, Jürg, 9240 Uzwil (CH); Loser, Werner, 9242 Oberuzwil (CH)
(74) Vertreter: Hepp, Dieter

(57) **Zusammenfassung**

Die Erfindung betrifft eine Vorrichtung zum Erzeugen einer Dichtkraft an einem Filtermodulaufbau (3) von mindestens einem oder mehreren übereinander gestapelten Filtermodulen(4, 4'), sowie einen Filtermodulaufbau (3) und ein Filtersystem (1), wobei ein Anpressdruck im Wesentlichen durch mindestens zwei Zusammenhalte-Elemente (10, 27) erzeugt wird, mindestens ein Zusammenhalte-Element (10) an einer Seite des Filtermodulaufbaus (3) anliegt und mindestens ein weiteres Zusammenhalte-Element (27) auf der gegenüberliegenden Seite des Filtermodulaufbaus (3) anliegt und zwischen Zusammenhalte-Elemente (10, 27), die auf gegenüberliegenden Seiten angeordnet sind, eine Federkraft in axialer Richtung (31) wirkt.

Eine Abdichtung zwischen Filtrat und Unfiltrat wird auch beim Auftreten von axialen Kräften gewährleistet und für ein Zusammenpressen mit einer definierten Dichtkraft wird gesorgt, wenn die Federkraft von einem Federelement (24) erzeugt wird, welches sich erfindungsgemäss zwischen den Zusammenhalte-Elementen (10, 27) und in einem Dichtungsbereich (15), der von den Filtermodulen (4, 4') umgeben wird, befindet.

## Beschreibung

Die Erfindung betrifft eine Vorrichtung zum Erzeugen einer Dichtkraft an einem Filtermodulaufbau von mindestens einem oder mehreren übereinander gestapelten Filtermodulen, wobei ein Anpressdruck in axialer Richtung im Wesentlichen durch mindestens zwei Zusammenhalte-Elemente erzeugt wird, mindestens ein Zusammenhalte-Element auf einer Seite des Filtermodulaufbaus anliegt, mindestens ein weiteres Zusammenhalte-Element auf der gegenüberliegenden Seite des Filtermodulaufbaus anliegt und zwischen Zusammenhalte-Elemente, die auf gegenüberliegenden Seiten angeordnet sind, eine Federkraft wirkt. Die Erfindung betrifft des Weiteren einen Filtermodulaufbau und ein Filtersystem.

Ein Filtermodul, im Folgenden auch kurz Modul genannt, besteht in der Regel aus mehreren aufeinander geschichteten scheibenartigen Filterzellen, die linsenförmig auf einen Drainagekörper gezogen sind. Die Zellen weisen eine zentrale Öffnung auf, die in einem Filtermodul so ausgerichtet sind, dass sie deckungsgleich übereinander liegen. Durch die zentrale Öffnung ist ein Zuganker, Metallklammern oder eine gitterartige Kernhülse geführt, welche den Stapel zusammenhält, bzw. -halten. Die Filterzellen werden in der Regel von einer zu filternden Flüssigkeit von aussen nach innen durchströmt und das Filtrat kann durch die zentrale Öffnung abfliessen. Dichtungsringe zwischen den Zellen verhindern einen Durchbruch des Unfiltrats, bzw. des Filtrats, und eine Vermischung von Unfiltrat mit Filtrat während des Betriebes.

Die Module sind in Filtergehäusen stapelbar, wobei in dem Filtergehäuse ein zentrisches Rohr vorgesehen sein kann, um der Anordnung die notwendige Lagesicherung zu geben. Damit eine ausreichende Dichtwirkung zwischen den einzelnen Modulen oder den endseitigen Anschlüssen der Anordnung gegeben ist, wird an einem Ende eine Anpressvorrichtung angebracht. Zwischen den Modulen sowie zwischen dem Randmodul und einem Abschlusselement sind Dichtungen vorgesehen.

DE 198 57 751 zeigt ein aus Filterzellen aufgebautes Filtermodul. In DE 197 44 574 und dem darin zitierten Stand der Technik wird erläutert, wie sich Filtermodule miteinander oder mit anderen Flüssigkeit führenden Bauteilen verbinden lassen, wobei die Module mit Abschlussringen versehen sind, die mit Adaptern verbindbar sind. Die Adapter dienen als Verbindungselement zu weiteren Adaptern oder weiteren Bauteilen und sind so ausgelegt, dass ein zentrales Führungsrohr nicht notwendig ist.

Ein Filtermodulaufbau aus miteinander kombinierten Modulen kann mittels eines Verschlusszapfens auf einer zentralen Führungsstange gesichert werden. Der Dichteffekt wird zum Beispiel über einen direkten Kraftschluss von einem Verschlusszapfen über ein Druckstück auf ein Abschlusselement oder direkt auf das randseitige Filtermodul erzielt.

Das Druckstück kann jedoch auch von einem Federelement auf ein randseitiges Modul, bzw. ein Abschlusselement, gedrückt werden, welches zum Beispiel zwischen Verschlusszapfen und Druckstück angeordnet ist. Das Federelement dient dazu, den Dichteffekt auch dann zu erhalten, wenn axiale Kräfte und daraus resultierende Bewegungen auftreten, z.B. wenn sich die Module während des Betriebes oder der Reinigung setzen und dabei Filterzellen Bewegungen in axialer Richtung ausführen.

Wenn kein Federelement oder ein Federelement ausserhalb des Filtrationsbereichs vorgesehen ist, greifen möglicherweise auftretende axiale Kräfte an vorhandenen Dichtungen an. Dabei kann eine Dichtung sich gegenüber der zugehörige Dichtungsauflagefläche bewegen. Die Wirkung von Flachdichtungen, deren Auflagefläche senkrecht zur Kraftrichtung ausgerichtet ist, wird sofort eingeschränkt, wenn ein Abstand zwischen Dichtung und Dichtungsauflage entsteht. Bei Dichtungen, die als O-Ringe um eine zentrale Führungsstange ausgeführt sind, wirkt eine axiale Reibungskraft zwischen der Dichtung und der Dichtungsauflage, welche die die Dichtkraft mindern kann. Kommt es zu Bewegungen des Filtermoduls in axialer Richtung, so führt die Reibungskraft zwischen O-Ring und zentraler Führungsstange dazu, dass der O-Ring auf der Auflagefläche haftet, oder die axiale Kraft reicht aus, um den O-Ring gegenüber der Führungstange zu bewegen, wobei Gleitreibungskräfte wirken. Der Übergang von der Haftreibung zur Gleitreibung des Dichtrings lässt sich nicht vorhersagen, die Dichtkraft, die sich aus der Federkraft und Reibungskraft zusammensetzt, lässt sich somit nicht definiert einstellen. Im schlechtesten Fall kann es zu einer Leckage kommen.

Die Reibungseigenschaften der Dichtung sind zudem stark von den Umgebungsbedingungen, wie Temperatur und Feuchtigkeit, abhängig und somit auch die resultierende Dichtkraft.

Die Aufgabe der Erfindung besteht darin, die Nachteile des bekannten Standes der Technik zu vermeiden und insbesondere eine Vorrichtung vorzustellen, mit der sich ein oder mehrere Filtermodule in einem Filtergehäuse anordnen und oder stapeln lassen, sowie einen Filtermodulaufbau und einen Filtersystem, wobei eine Abdichtung zwischen Filtrat und Unfiltrat auch beim Auftreten von axialen Kräften und daraus resultierenden Bewegungen gewährleistet und für eine Zusammenpressen der Filtermodule mit einer definierten Dichtkraft gesorgt wird.

Die Aufgabe wird gelöst durch eine gattungsgemässe Vorrichtung, wobei die Federkraft von einem Federelement erzeugt wird, welches sich zwischen den Zusammenhalte-Elementen und in dem Dichtungsbereich, der von den Filtermodulen umgeben wird, befindet.

Der Dichtungsbereich ist derjenige Bereich, in dem sich bei einer Durchströmung des Filtermodulaufbaus von aussen nach innen das Filtrat befindet. Ein Filtermodulaufbau kann jedoch auch von innen nach aussen durchflossen werden, in diesem Fall befindet sich im genannten Dichtungsbereich das Unfiltrat. Je nach der Ausführung eines Abschlusses des Dichtungsbereichs muss sich das Volumen des Dichtungsbereichs nicht unbedingt nur auf das Innere der Filtermodule beschränken.

Bei dem Federelement kann es sich um eine Spiralfeder, eine Gasdruckfeder, ein Gummi-Element, eine hydraulische Feder oder eine anderes Federelement handeln, das aufgrund einer Vorspannung in der Lage ist, eine Zugkraft zwischen auf gegenüberliegenden Seiten angeordneten Zusammenhalte-Elementen auszuüben.

Der erfindungsgemässe Aufbau garantiert, dass die Federkraft die Zusammenhalte-Elemente gegenüberliegender Seiten stets zusammenpresst und keine Dichtung zwischen gegenüberliegenden Zusammenhalte-Elementen notwendig ist, welche die im Wesentlichen von dem Federelement erzeugte Federkraft mindern könnte.
Bewegungen, die durch Spannungen während des Betriebes oder der Reinigung der Filtermodule entstehen, werden von dem mindestens einen Federelement aufgenommen, wodurch axial wirkende Kräfte nicht dazu führen, dass Dichtung und Dichtungsauflagefläche eine Relativbewegung ausführen. Dichtung und Dichtungsauflage bleiben auch bei Bewegungen eines Filtermoduls in axialer Richtung in festem Kontakt.

Die Federkraft wird im Wesentlichen durch die Federkonstante des Federelements bestimmt und lässt sich daher definiert einstellen. Die Wirkung der Dichtungsringe beschränkt sich auf die Flüssigkeitsbarriere. Die Dichtringe unterliegen der durch die erfindungsgemässe Vorrichtung erzeugten Dichtungskraft, welche verhindert, dass Dichtung und Dichtungsauflage sich bei gegeneinander bewegen können.

Eine Veränderung der Materialeigenschaften der Dichtungsringe durch äussere Parameter, wie Temperatur oder Feuchtigkeit, spielt solange für den Filterprozess keine Rolle, wie die Dichtungseigenschaft unverändert bleibt. Zu einer Variation der Gesamtdichtkraft trägt die Veränderung der Haftreibung oder ein Übergang von Haft- zu Gleitreibung zwischen Dichtung und Dichtungsauflage praktisch nicht bei.

Die Federkraft des Federelements ist dabei bevorzugt so ausgelegt, dass axialen Auslenkungen von Teilen des Filtermodulaufbaus sich im Rahmen der Elastizität des Federelements bewegen. Die Dichtwirkung der Zusammenhalte-Elemente kann daher über Flachdichtungen erfolgen, welche durch die Wirkung der erfindungsgemässen Vorrichtung auch bei Bewegungen des Filtermodulsystems an die Dichtungsflächen angepresst sind. Die Anordnung des mindestens einen Federelements zwischen den Zusammenhalte-Elementen macht es unnötig, ein Zusammenhalte-Element gegenüber einer zentralen Führungsstange abzudichten. Der Einsatz von O-Ring Dichtungen, die sich bei einer axialen Bewegung der Filtermodule gegenüber der Führungstange verschieben können, und die in diesem Fall eine hohe Verschleissanfälligkeit haben, ist nicht notwendig.

Eine besonders kompakte Anordnung wird erreicht, wenn sich das Federelement innerhalb einer zentralen Öffnung des Filtermodulaufbaus befindet. Bei einer Filterrichtung von aussen nach innen, befindet sich in diesem Raum während des Betriebes das Filtrat.

Die Federkraft kann von einer Zugfeder erzeugt werden, welche zwischen den Zusammenhalte-Elementen angeordnet ist und eine Kraft ausübt, welche die beiden Zusammenhalte-Elemente zueinander zieht. Es kann jedoch auch mindestens ein Abstützelement vorgesehen sein und die Federkraft von einer Druckfeder erzeugt werden. Auch in diesem Fall werden die Zusammenhalte-Elemente durch die Federkraft zueinander gezogen. Durch eine einstellbare Position des oder der Abstützelemente kann die Federkraft der Druckfeder eingestellt und nachjustiert werden.

Eine genaue Positionierung und fixe Arretierung des Filtermodulaufbaus lässt sich erreichen, wenn mindestens ein Zusammenhalte-Element zumindest teilweise durch die zentrale Öffnung geführt wird oder mit einem Bauteil verbunden ist, welches innerhalb der zentralen Öffnung angeordnet ist. Die zentrale Führung schränkt die Bewegungsvariationen des Filtermodulbereichs stark ein und gibt durch ihre Lage eine eindeutige axiale Richtung vor, auf der Bewegungen der Filtermodule überhaupt möglich sind.

Für Aufbauten mit zentraler Führung ist die erfindungsgemässe Vorrichtung von besonderem Vorteil. Um eine wirkungsvolle zentrale Führung zu erzielen, sollte das Führungselement, z.B. ein zentrales Führungsrohr oder eine zentrale Führungsstange, durch den gesamten Aufbau verlaufen. Dabei wird ein Kontakt zwischen dem ersten und dem zweiten Zusammenhalte-Element hergestellt. Um eine optimale Dichtungswirkung zu erhalten, sind die Zusammenhalte-Elemente auf einer Zugstange anzuordnen. Bei einem starren Führungsrohr sind Dichtungen zwischen Zusammenhalte-Element und Führungsrohr notwendig, auf die Kräfte wirken können. Erfolgt eine Entkopplung der Zusammenhalte-Elemente über ein erfindungsgemäss angeordnetes Federelement, so greifen zusätzlich auftretenden Kräfte vorwiegend an dem Federelement und nicht an den Dichtungen an. Das Federelement verbindet und erlaubt gleichzeitig eine axiale Bewegungsfreiheit.

In einer bevorzugten Ausführung sind die mindestens zwei Zusammenhalte-Elemente mit zwei teilweise ineinander liegende Zugelemente, wobei es sich insbesondere um eine Zugstange, die in einem Zugrohr geführt ist, handelt, verbunden. Es können auch zwei Zugrohre verwendet werden, wobei die Rohre unterschiedliche Durchmesser besitzen, sodass ein Rohr mit geringerem Durchmesser sich als Innenrohr in das Rohr mit dem grösseren Durchmesser, das Aussenrohr, führen lasst.

Das Ineinandergreifen von Zugstange und Zugrohr garantiert eine eindeutige Zugachse der Zusammenhalte-Elemente. Die Zugelemente können mittel- oder unmittelbar durch das Federelement verbunden sein, sodass die zentrale Führung auch unter Belastung gegeben bleibt. Das Federelement kann innerhalb oder ausserhalb der Zugelemente angeordnet sein.

Eine vorzugsweise Ausführungsform besteht darin, dass das Aussenrohr eine Aussparung aufweist, durch welche an dem inneren Zugelement befestigte Haltestifte führbar sind, an welche ein um das Aussenrohr angeordnetes Federelement ankoppelbar ist.

Durch die Ausrichtung des Federelements in Richtung der Achse der zentralen Öffnung werden Bewegungen längs dieser axialen Richtung kompensiert. Eine Bewegung der Filtermodule gegeneinander und eine Drehbewegung einer Dichtung auf einer Dichtfläche ist zu vermeiden. Hat die Aussparung eine Form, die den Haltestiften lediglich eine Bewegung in axialer Richtung erlaubt, so kann eine rotatorische Bewegung der Zugrohre gegeneinander und damit auch der Filtermodule ausgeschlossen werden. Dies erhöht die Stabilität des Filtermodulaufbaus und schont die Flachdichtungen.

In einer bevorzugten Ausführung ist an der Aussenseite des Aussenrohrs eine Druckfeder fixiert, welche auf dem am inneren Zugelement befestigten und aus der Aussparung des Aussenrohrs herausgeführten Haltestift aufliegt und diesen wegdrückt.

Der Haltestift, das innere Zugelement und das damit verbundene Zusammenhalte-Element werden in Richtung des gegenüberliegenden Zusammenhalte-Elements gedrückt. Die Druckfeder befindet sich daher auf der Seite des Haltestifts, die von dem zuletzt genannten Zusammenhalte-Element weg weist.

In einer alternativen Ausführung kann eine Zugfeder vorgesehen sein, welche den mindestens einen Haltestift, damit das innere Zugelement und das damit verbundene Zusammenhalte-Element in Richtung des gegenüberliegenden Zusammenhalte-Elements zieht.

Wünschensweit ist eine Einstellmöglichkeit für die Länge, auf der das innere Zugelement in das Aussenrohr hineinreicht und damit für die Vorspannung der Feder. In einer vorzugsweisen Ausführung weist das innere Zugelement ein Aussengewinde auf und eine Vorspannung des Federelements wird durch auf diesem Gewinde angeordnete Kontermuttern erzielt.

Durch die Variation der Vorspannung und, wenn notwendig und gewollt, durch eine gezielte Auswahl des verwendeten Federelements können unterschiedliche Abstände der Zusammenhalte-Elemente realisiert werden. Die erfindungsgemässe Vorrichtung kann somit in verschiedene Anordnungen von Filtermodulaufbauten, z.B. mit verschieden grossen Filtermodulen, eingesetzt werden.

In einem bevorzugten Ausführungsbeispiel ist ein erstes Zusammenhalte-Element als Verschlusszapfen ausgeführt, welcher auf ein Abschlusselement wirkt, und zwischen Verschlusszapfen und Abschlusselement ist eine Dichtung, insbesondere eine Flachdichtung, vorgesehen.

Das gegenüberliegende Zusammenhalte-Element kann in einer Auflagefläche, zum Beispiel dem Boden des Filtergehäuses, bestehen, auf dem ein, bzw. ein randseitiges, zum Beispiel das unterste, Filtermodul anliegt. Die Dichtung kann auch in diesem Fall über eine Flachdichtung erfolgen. Bevorzugt ist die Anordnung vertikal ausgeführt, sodass die Filtermodule auf der Auflagefläche und gegebenenfalls aufeinander aufliegen.

Die Anpressung zur Dichtung und zum Arretieren erfolgt, indem das eine Zusammenhalte-Element, zum Beispiel ein Druckelement oder ein Verschlusszapfen von dem Federelement gegen die Auflagefläche gedrückt oder gezogen wird. Der Filtermodulaufbau wird dadurch zwischen den Zusammenhalte-Elementen eingeklemmt und das Federelement bringt eine genügend hohe Dichtkraft auch auf, wenn Teile des Filtermodulaufbaus Bewegungen in axialer Richtung ausführen.

Ein zentral geführtes Zugrohr, das mit einem Federelement verbunden ist kann entweder einteilig mit einem Zusammenhalte-Element, z.B. der Auflagefläche verbunden sein, oder es erfolgt eine Befestigung über Verbindungselemente.

Da mögliche Längenvariationen je nach Filtermodulaufbau verglichen mit der gesamten Ausdehnung des Systems klein sind, kann es ausreichen, ineinander liegende Zugrohre nur auf einem kleinen Teil der zentralen Achsenausdehnung auszuführen und den verbleibenden Teil der zentralen Führung massiv zu gestalten.

Da der Zu- oder Abfluss des Filtrats oder Unfiltrats durch die zentrale Öffnung erfolgt, ist es günstig, wenn ein Zusammenhalte-Element mit einem Flüssigkeit führendem Element, insbesondere mit einem Abflussrohr, verbunden ist. Zusammenhalte-Element und Flüssigkeit führendes Element können einteilig ausgeführt sein, zum Beispiel kann eine Auflagefläche im Filtergehäuse mit einem Stutzen versehen sein, durch den Flüssigkeit aus- oder eintreten kann. Ein zusätzliches Dichtelement ist nicht notwendig.

Die Erfindung umfasst ausserdem einen Filtermodulaufbau mit mindestens einem Filtermodul aus einer Mehrzahl von Filterzellen mit zentraler Öffnung, der durch mindestens zwei Zusammenhalte-Elemente zusammengedrückt wird, wobei mindestens ein Zusammenhalte-Element auf einer Seite des Filtermodulaufbaus anliegt, mindestens ein Zusammenhalte-Element auf der gegenüberliegenden Seite des Filtermodulaufbaus anliegt und zwischen Zusammenhalte-Elementen, die auf gegenüberliegenden Seiten angeordnet sind, eine Federkraft wirkt, wobei die Federkraft von wenigstens einem Federelement erzeugt wird, welches sich zwischen den Zusammenhalte-Elementen und in dem Dichtungsbereich, der von den Filtermodulen umgeben wird, befindet.

Erfindungsgegenstand ist zudem ein Filtersystem mit einem Filtergehäuse und einem darin vorgesehenen Filtermodulaufbau, der wie oben beschrieben ausgeführt ist.
- Figur 1: zeigt ein Teilschnittbild eines Beispiels für ein Filtersystem, das nach dem Stand der der Technik ausgeführt ist;
- Figur 2: zeigt ein Schnittbild eines Ausführungsbeispiels für ein erfindungsgemässes Filtersystem.

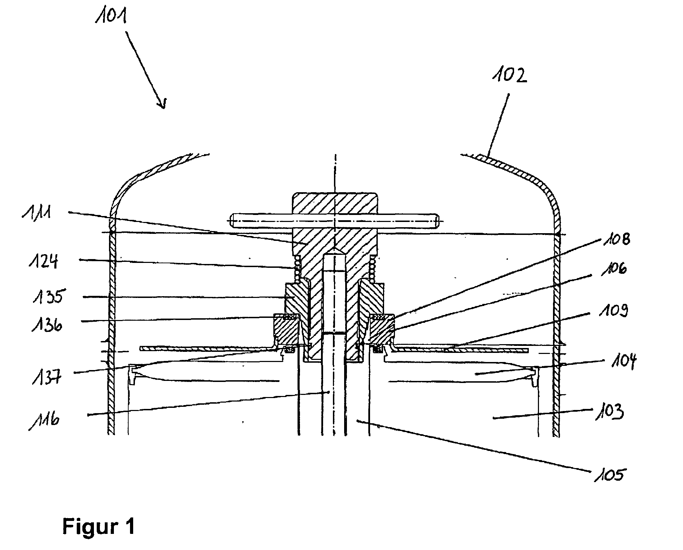

Figur 1 zeigt ein Teilschnittbild eines Beispiels für ein Filtersystem 101, das nach dem Stand der Technik ausgeführt ist. Das Filtersystem 101 umfasst ein Filtergehäuse 102 und einen darin angeordneten Filtermodulaufbau 103 mit einem zuoberst angeordneten Filtermodul 104. Die Filtermodule 104 besitzen eine zentrale Öffnung 105 und sind so übereinander gesetzt, dass sich die jeweiligen zentralen Öffnungen 105 fluchtend übereinander befinden. Das zuoberst angeordnete Filtermodul 104 ist mit einem Abschlusselement 106 versehen, welches aus einem auf einem Rand 107 des obersten Filtermoduls 104 aufliegenden Ringelement 108 und einem deckelartig über das Filtermodul 104 ragenden Abdeck-Element 109 besteht.

Innerhalb der zentralen Öffnungen 105 befindet sich einen Zugstange 116, die fest mit einem Verschlusszapfen 111 verbunden ist.

Die Dichtkraft wird von einer Druckfeder 124 erzeugt, die zwischen dem Verschlusszapfen 111 und einem Druckelement 135 angeordnet ist. Das Druckelement 135 liegt zum einen über eine Flachdichtung 136 auf dem Ringelement 108 des Abschlusselements 106 auf, ist zum andern mit einer O-Ring Dichtung 137 gegenüber dem fest mit der zentralen Führungsstange 116 verbundenen Verschlusszapfen 111 abgedichtet.

Die Reibungskraft der O-Ring Dichtung 137 kann die Dichtkraft reduzieren. In einem Extremfall kann die Reibungskraft der O-Ring Dichtung 137 sogar grösser werden als die Federkraft der Druckfeder 124. Die Federkraft reicht dann nicht aus, um eine genügend grosse Dichtkraft zu erzeugen und es kann zu einer Leckage kommen.

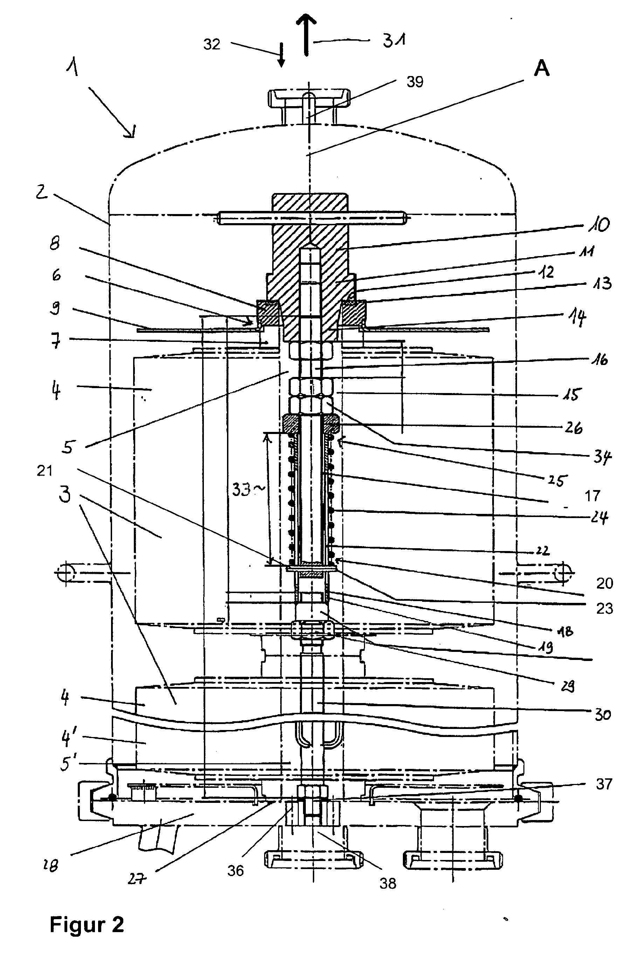

Figur 2 zeigt ein Schnittbild eines Ausführungsbeispiels für ein erfindungsgemässes Filtersystem 1 mit einem Filtergehäuse 2 und einem darin angeordneten Filtermodulaufbau 3 aus einer angedeuteten Vielzahl von Filtermodulen 4, 4'. Die Filtermodule 4, 4' besitzen eine zentrale Öffnung 5, 5' und sind so übereinander gesetzt, dass sich die jeweiligen zentralen Öffnungen 5, 5' fluchtend übereinander befinden. Das zuoberst angeordnete Filtermodul 4 ist mit einem Abschlusselement 6 versehen, welches aus einem mit dem Rand 7 des obersten Filtermoduls 4 verbundenen Ringelement 8 und einem optionalen, deckelartig über das Filtermodul 4 ragenden Abdeck-Element 9 besteht.

Ein erstes Zusammenhalte-Element 10 ist als Verschlusszapfen 11 ausgeführt. Dieser besitzt eine senkrecht zur Filterachse A verlaufene Auflagefläche 12, mit welcher das Zusammenhalte-Element 10 über eine Flachdichtung 13 auf dem Ringelement 8 des Abschlusselements 6 aufliegt. Gleichzeitig ragt ein Teil 14 des Verschlusszapfens 11 in die zentrale Öffnung 5 hinein. Der Verschlusszapfen 11 bildet den oberen Abschluss eines Dichtungsbereichs 15, der von den Filtermodulen 4, 4' umschlossen wird.

Das Zusammenhalte-Element 10 ist fest mit einer zentralen Führungsstange 16 verbunden. Diese ragt als inneres Zugelement 17 in ein als Aussenrohr 18 ausgeführtes zentrales Führungsrohr 19 und besitzt an ihrem unteren Ende 20 einen Haltestift 21, welche durch in dem Ausserrohr befindliche Aussparungen 22 radial in die zentrale Öffnung 5 weist.

Der Haltestift 21 bietet Auflagepunkte 23 für eine Druckfeder 24, die mit ihrem den Auflagepunkten 23 gegenüberliegenden Ende 25 über eine Manschette 26 fest mit dem Aussenrohr 18 verbunden ist.

Die Druckfeder 24 wirkt als erfindungsgemässes Federelement zwischen erstem Zusammenhalte-Element 10 und einem zweitem Zusammenhalte-Element 27.

Als zweites Zusammenhalte-Element 27 dient der Boden 28 des Filtergehäuses 2 oder ein in der Zeichnung nicht dargestelltes mit dem Boden 28 verbundenes Anschlussstück. Auf ihn ist das unterste Filtermodul 4' aufgelegt.

Das zentrale Führungsrohr 19 ist über eine Schraubverbindung 29 mit einer Stange 30 verbunden, die als Verlängerung des zentralen Führungsrohrs 19 dient.

Bei einer Bewegung der Filtermodule 4, 4' in axialer Richtung 31 besitzt das erste zentrale Führungsrohr 16 einen Freiheitsgrad für eine Bewegung gegenüber dem zweiten zentralen Führungsrohr 19. Dieser wird durch die Druckfeder 24 eingeschränkt. Die Federspannung der Druckfeder 24 sorgt für einen Abstand 33 zwischen der Manschette 26 an dem Aussenrohr 19 und dem Haltestift 21 des inneren Zugelements 17, zieht das innerer Zugelement 17 in Richtung 32 des Bodens 27 des Filtergehäuses 2 und bewirkt, dass der Verschlusszapfen 11 fest auf der Flachdichtung 13 und diese auf dem Abschlusselement 6 aufliegt.

Die Vorspannung der Druckfeder 24 wird durch zwei Kontermuttern 34 erreicht, welche auf einem in der Figur nicht näher gezeigten Gewinde auf der Aussenseite des Innenrohrs 17 aufgeschraubt sind.

Das Filtersystem 1 kann über einen im Boden 28 befindlichen Einfüllstutzen 35 befüllt werden. Der Abfluss des nicht dargestellten Filtrats erfolgt über Schlitze 36, die um die Schraubbefestigung 37 der zentralen Führungsstange 30 am Boden 28 angeordnet sind, in ein Abflussrohr 38.

Das Filtersystem 1 besitzt eine Entlüftungsöffnung 39.

## Patentansprüche

1. Vorrichtung zum Erzeugen einer Dichtkraft an einem Filtermodulaufbau von mindestens einem oder mehreren übereinander gestapelten Filtermodulen, wobei
- ein Anpressdruck in axialer Richtung im Wesentlichen durch mindestens zwei Zusammenhalte-Elemente erzeugt wird,
- mindestens ein Zusammenhalte-Element auf einer Seite des Filtermodulaufbaus anliegt,
- mindestens ein Zusammenhalte-Element auf der gegenüberliegenden Seite des Filtermodulaufbaus anliegt und
- zwischen Zusammenhalte-Elementen, die auf gegenüberliegenden Seiten angeordnet sind, eine Federkraft wirkt, **dadurch gekennzeichnet, dass** die Federkraft von wenigstens einem Federelement (24) erzeugt wird, welches sich zwischen den Zusammenhalte-Elementen (10, 26) und in dem Dichtungsbereich (15), der von den Filtermodulen (4,4') umgeben wird, befindet.

2. Vorrichtung nach Anspruch 1, **dadurch gekennzeichnet, dass** sich das Federelement (24) innerhalb von zentralen Öffnungen (5,5') des Filtermodulaufbaus (3) befindet.

3. Vorrichtung nach mindestens einem der vorhergehenden Ansprüche, **dadurch gekennzeichnet, dass** die Federkraft von einer Druckfeder (24) erzeugbar ist.

4. Vorrichtung nach mindestens einem der vorhergehenden Ansprüche, **dadurch gekennzeichnet, dass** die Federkraft an einer zwischen mindestens zwei Zusammenhalte-Elementen (10, 27) angeordneten Zugstange angreift.

5. Vorrichtung nach mindestens einem der vorhergehenden Ansprüche, **dadurch gekennzeichnet, dass** die mindestens zwei Zusammenhalte-Elemente (10, 27) mit zwei zumindest teilweise ineinander liegenden Zugelementen (17, 18) verbunden sind.

6. Vorrichtung nach Anspruch 5, **dadurch gekennzeichnet, dass** das aussen liegende Zugrohr (18) mindestens eine Aussparung (22) aufweist, durch welche mindestens ein an dem inneren Zugelement (17) befestigter Haltestift (21) führbar ist, auf welchen ein um das aussen liegenden Zugrohr (18) angeordnetes Federelement (24) ankoppelbar ist.

7. Vorrichtung nach mindestens einem vorhergehenden Ansprüche, **dadurch gekennzeichnet, dass** das innere Zugelement (17) ein Aussengewinde aufweist und eine Vorspannung des Federelements (24) durch auf diesem Gewinde angeordnete Kontermuttern (34) erzielt wird.

8. Vorrichtung nach mindestens einem der vorhergehenden Ansprüche, **dadurch gekennzeichnet, dass** ein Zusammenhalteelement (10) als Verschlusszapfen (11) ausgeführt ist, welcher auf ein Abschlusselement (6) und oder eine Filtermodul (4) wirkt, und zwischen Verschlusszapfen (11) und Abschlusselement (6), bzw. Filtermodul(4), eine Dichtung (13) vorgesehen ist.

9. Vorrichtung nach mindestens einem der vorhergehenden Ansprüche, **dadurch gekennzeichnet, dass** ein Zusammenhalte-Element (26) mit einem flüssigkeitsführenden Element, insbesondere mit einem Abflussrohr, verbunden ist.

10. Vorrichtung nach einem der vorhergehenden Ansprüche, **dadurch gekennzeichnet, dass** sich zwischen den Filtermodulen (4, 4') Flachdichtungen befinden.

11. Filtermodulaufbau mit mindestens einem Filtermodul aus einer Mehrzahl von Filterzellen mit zentraler Öffnung, der durch mindestens zwei Zusammenhalte-Elemente zusammengedrückt wird, wobei
- mindestens ein Zusammenhalte-Element auf einer Seite des Filtermodulaufbaus anliegt,
- mindestens ein Zusammenhalte-Element auf der gegenüberliegenden Seite des Filtermodulaufbaus anliegt und
- zwischen Zusammenhalte-Elementen, die auf gegenüberliegenden Seiten angeordnet sind, eine Federkraft wirkt, **dadurch gekennzeichnet, dass** die Federkraft von wenigstens einem Federelement (24) erzeugt wird, welches sich zwischen den Zusammenhalte-Elementen (10, 27) und in dem Dichtungsbereich (15), der von den Filtermodulen (4, 4') umgeben wird, befindet.

12. Filtersystem mit einem Filtergehäuse und einem darin vorgesehenen Filtermodulaufbau gemäss Anspruch 11.
